# EUROPÄISCHE PATENTANMELDUNG

(11) **EP 3 578 837 A1**
(43) Veröffentlichungstag der Anmeldung: **11.12.2019**
(21) Anmeldenummer: 18186060.2
(22) Anmeldetag: 27.07.2018
(51) Int. Cl.: F16C 17/02, F16C 17/18

(54) **RADIALGLEITLAGERVORRICHTUNG**

(30) Priorität: 06.06.2018 DE 102018113452
(71) Anmelder: ABB Turbo Systems AG, 5400 Baden (CH)
(72) Erfinder: Ammann, Bruno, 5000 Aarau (CH); Kreienkamp, Christian, 79713 Bad Säckingen (DE)
(74) Vertreter: Zimmermann & Partner Patentanwälte mbB

(57) **Zusammenfassung**

Die Erfindung betrifft eine Radialgleitlagervorrichtung, die ein Lagergehäuse, eine Welle, eine oder mehrere zwischen der Welle und dem Lagergehäuse angeordnete Gleitlagerbüchsen, einen zwischen der jeweiligen Gleitlagerbüchse und dem Lagergehäuse vorgesehenen äußeren Schmierspalt, einen zwischen der jeweiligen Gleitlagerbüchse und der Welle vorgesehenen inneren Schmierspalt und mehrere in der jeweiligen Gleitlagerbüchse befindliche, den äußeren Schmierspalt mit dem inneren Schmierspalt über Öltaschen verbindende Ölzuführbohrungen aufweist, wobei die Ölzuführbohrungen in Axialrichtung der Welle schräg durch die jeweilige Gleitlagerbüchse verlaufen.

## Beschreibung

### Technisches Gebiet

Die Erfindung betrifft eine Radialgleitlagervorrichtung, wie sie im Zusammenhang mit der Lagerung der Welle eines für Großmotoren vorgesehenen Turboladers verwendet werden kann.

### Stand der Technik

Zur Lagerung der Welle eines Turboladers werden Lagerteile für die Axiallager der Welle, die zum Aufnehmen von Axialkräften vorgesehen sind, und Lagerteile für die Radiallager der Welle, die zum Führen der Welle sowie zum Aufnehmen und Dämpfen der Wellenbewegung in radialer Richtung vorgesehen sind, verwendet. Zur Verbesserung der Dynamik des das Turbinenrad, das Verdichterrad und die Welle umfassenden Rotors des Abgasturboladers werden die Gleitlagerbüchsen der Radiallager oft nicht fest ins Lagergehäuse eingebaut, sondern schwimmend, mit radialem Spiel. Wenn die Gleitlagerbüchsen nicht rotieren, wird der äußere Schmierfilm als Quetschöldämpfer bezeichnet.

Heutige Turbolader haben strenge Bauraumgrenzen, da eine möglichst kompakte Bauweise der gesamten Maschine gewünscht ist. Der axiale Abstand in Längsrichtung der Wellenachse zwischen den Radiallagerstellen hat einen großen Einfluss auf die Gesamtabmessungen des Turboladers. Dieser axiale Abstand kann jedoch nicht beliebig klein gewählt werden, ohne dass die Dynamik des Rotors des Turboladers beeinträchtigt wird. Folglich ist stets ein möglichst guter Kompromiss zwischen dem axialen Abstand der Radiallagerstellen und der Baugröße des Turboladers zu finden.

Es ist bei einer hydrodynamischen Gleitlagervorrichtung bereits bekannt, die Innensitze des Radialgleitlagers, die die Schnittstelle zwischen der Welle und der Gleitlagerbüchse des Radiallagers bilden, relativ zur sogenannten Quetschöldämpferfläche, die zwischen der Gleitlagerbüchse und dem die Gleitlagerbüchse umgebenden Lagergehäuse gebildet ist, axial nach außen zu verschieben. Dies kann jedoch im Betrieb des Turboladers zu einer eingeschränkten Funktion der Quetschöldämpferfläche führen. Insbesondere wenn der Quetschöldämpferfilm breiter als der innere Schmierfilm ist, resultiert ein axialer Versatz der Wirklinien der Schmierfilmkräfte von innerem und äußerem Film.

Ein Verlagern der Quetschöldämpferfläche axial nach außen derart, dass die Quetschöldämpferfläche in Radialrichtung direkt über den Innenlagerflächen liegt, ist konstruktiv nicht möglich. Ein Verlagern der Innenlagerstellen axial nach innen derart, dass die Innenlagerfläche in Radialrichtung direkt unter der Quetschöldämpferfläche liegt, ist aus rotordynamischer Sicht nicht möglich, da es zu höheren Kippspielen des Rotors und zu einem Anstreifen der Laufräder des Rotors am Lagergehäuse führen würde. Dadurch würde eine Vergrößerung der Blattspitzenspiele von Turbine und Verdichter notwendig, was zu einem Wirkungsgradverlust führt.

Aus der DE 26 33 481 C3 ist ein Radialgleitlager für die Welle schnell laufender Maschinen, insbesondere für Abgasturbolader, bekannt. Dieses Radialgleitlager weist wenigstens eine im Gehäuse schwimmend angeordnete Lagerbuchse auf, die mit der Welle und dem Gehäuse einen äußeren und einen inneren Lagerspalt bildet. Dabei ist die Weite dieser Lagerspalte größer als das bei Gleitlagern übliche Spiel. Des Weiteren ist ein drehfest angeordneter Anlaufbund vorgesehen, gegen welchen die Lagerbuchse durch das Schmiermittel gehalten ist, das den beiden Lagerspalten von einer Ringkammer zugeführt wird. Diese Ringkammer grenzt an die dem Anlaufbund abgekehrte Buchsenstirnfläche und den äußeren Lagerspalt an. Zwischen der Ringkammer und dem inneren Lagerspalt ist ein zwischen der ringkammerseitigen Buchsenstirnfläche und einem zur Welle hin im Wesentlichen abdichtenden Drosselring ausgebildeter Drosselspalt vorgesehen. Die Ringkammer erstreckt sich axial von der Lagerbuchse weg nur bis zu einer vom Drosselring gebildeten Ringwand und liegt radial weiter außen als der innere Lagerspalt. Durch einen derartigen Aufbau eines Radialgleitlagers soll eine Erhöhung der Betriebssicherheit und der Lebensdauer sowie eine Verminderung der Reibungsverluste des Radialgleitlagers erreicht werden.

### Aufgabe der Erfindung

Die Aufgabe der Erfindung besteht darin, eine Gleitlagervorrichtung anzugeben, deren Funktionalität verbessert ist. Insbesondere soll das rotordynamische Verhalten durch eine verbesserte Funktion des Quetschöldämpfers unter Berücksichtigung gegebener Bauraumeinschränkungen optimiert werden.

### Kurze Darstellung der Erfindung

Diese Aufgabe wird durch eine Gleitlagervorrichtung gelöst, welche ein Lagergehäuse, eine oder mehrere zwischen der Welle und dem Lagergehäuse angeordnete Gleitlagerbüchsen, einen zwischen der jeweiligen Gleitlagerbüchse und dem Lagergehäuse vorgesehenen äußeren Schmierspalt, einen zwischen der jeweiligen Gleitlagerbüchse und der Welle vorgesehenen inneren Schmierspalt und mehrere in der jeweiligen Gleitlagerbüchse befindliche, den äußeren Schmierspalt mit dem inneren Schmierspalt über Öltaschen verbindende Ölzuführbohrungen aufweist, wobei die Ölzuführbohrungen in Axialrichtung der Welle schräg durch die jeweilige Gleitlagerbüchse verlaufen.

Die Vorteile der Erfindung bestehen insbesondere darin, dass bei Verwendung einer Gleitlagervorrichtung gemäß der Erfindung das Vorhandensein einer hinreichend großen Quetschöldämpferfläche gewährleistet werden kann, so dass die Funktion der Quetschöldämpfung nicht beeinträchtigt ist. Des Weiteren kann gewährleistet werden, dass die Quetschöldämpferfläche ihre Wirklinie möglichst nahe an der axialen Position der zugehörigen Innenlagerfläche hat. Dadurch wird erreicht, dass im Betrieb des Turboladers die Stabilität des Radiallagers und der Rotation der Welle im Vergleich zu bekannten Vorrichtungen erhöht ist.

Gemäß einer Ausführungsform der Erfindung weist die Radialgleitlagervorrichtung eine im äußeren Schmierspalt gebildete Quetschöldämpferfläche auf.

Gemäß einer Ausführungsform der Erfindung ist im äußeren Schmierspalt eine Quetschöldämpferfläche gebildet, die eine im inneren Schmierspalt vorgesehene Innenlagerfläche in Radialrichtung vollständig überdeckt.

Gemäß einer Ausführungsform der Erfindung liegen der axiale Außenrand der Quetschöldämpferfläche und der axiale Außenrand der Innenlagerfläche in Radialrichtung der Welle in einer Flucht.

Gemäß einer Ausführungsform der Erfindung übersteht der axiale Innenrand der Quetschöldämpferfläche den axialen Innenrand der Innenlagerfläche in Axialrichtung.

Gemäß einer Ausführungsform der Erfindung ist im äußeren Schmierspalt eine Quetschöldämpferfläche gebildet, die die Innenlagerfläche in Radialrichtung weitgehend überdeckt.

Gemäß einer Ausführungsform der Erfindung überdeckt die Quetschöldämpferfläche die Innenlagerfläche zu mehr als 70 %.

Gemäß einer Ausführungsform der Erfindung wird die Quetschöldämpferfläche außermittig mit Schmieröl versorgt.

Gemäß einer Ausführungsform der Erfindung wird die Quetschöldämpferfläche von einer Seite aus mit Schmieröl versorgt.

Gemäß einer Ausführungsform der Erfindung verlaufen die Ölzuführbohrungen in einem Winkel durch die Gleitlagerbüchse, der im Bereich von 20° bis 70° liegt.

Gemäß einer Ausführungsform der Erfindung weist die Gleitlagervorrichtung zwei separate, in Axialrichtung der Welle voneinander beabstandete Gleitlagerbüchsen auf.

Gemäß einer Ausführungsform der Erfindung verlaufen die Ölzuführbohrungen derart schräg durch die jeweilige Gleitlagerbüchse, dass ihr Abstand voneinander in Richtung vom Gehäuse zur Welle größer wird.

Gemäß einer Ausführungsform der Erfindung weist die Radialgleitlagervorrichtung eine einzige Gleitlagerbüchse auf, durch welche in Axialrichtung voneinander beabstandete Ölzufuhrbohrungen verlaufen.

Gemäß einer Ausführungsform der Erfindung verlaufen die Ölzuführbohrungen jeweils derart schräg durch die Gleitlagerbüchse, dass ihr Abstand voneinander in Richtung vom Gehäuse zur Welle größer wird.

Gemäß einer Ausführungsform der Erfindung weisen die Gleitlagerbüchsen ihren axialen Endbereichen benachbart jeweils eine Abschirmung auf, bei der es sich um einen Dichtring oder einen Bund im Lagergehäuse handelt.

### Kurze Beschreibung der Zeichnungen

Nachfolgend wird die Erfindung anhand von in den Zeichnungen veranschaulichten Ausführungsformen näher erläutert. Es zeigt
Figur 1 eine Skizze zur Erläuterung eines ersten Ausführungsbeispiels für eine bekannte Radialgleitlagervorrichtung,
Figur 2 eine Skizze zur Erläuterung eines zweiten Ausführungsbeispiels für eine bekannte Radialgleitlagervorrichtung,
Figur 3 eine Skizze zur Veranschaulichung des grundsätzlichen Aufbaus einer Gleitlagervorrichtung gemäß der Erfindung,
Figur 4 eine Skizze zur Erläuterung eines ersten Ausführungsbeispiels für eine Radialgleitlagervorrichtung gemäß der Erfindung und
Figur 5 eine Skizze zur Erläuterung eines zweiten Ausführungsbeispiels für eine Radialgleitlagervorrichtung gemäß der Erfindung.

### Beschreibung von Ausführungsbeispielen

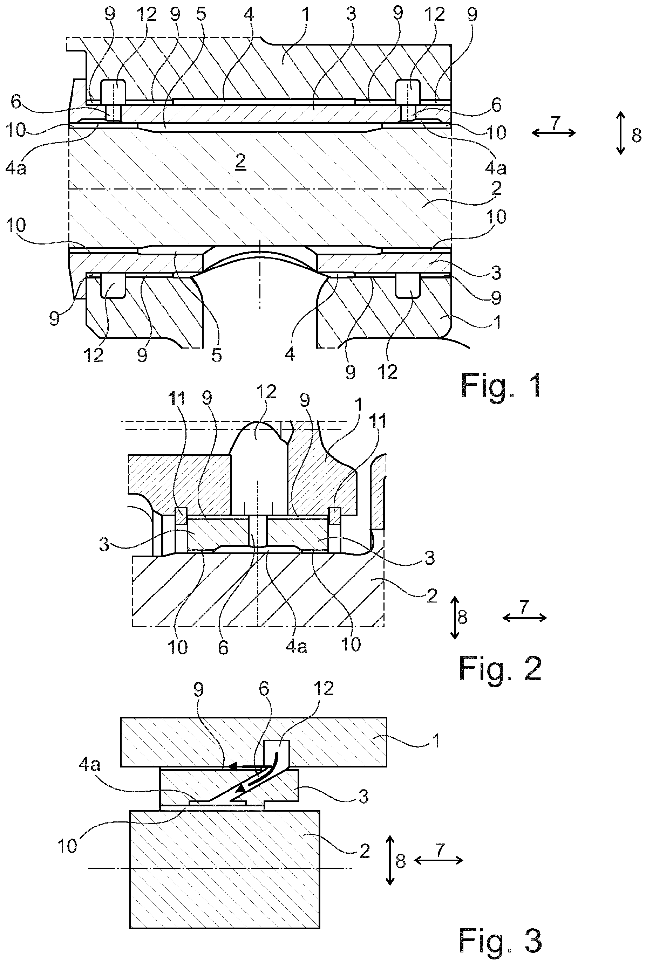

Die Figur 1 zeigt eine Skizze zur Erläuterung eines ersten Ausführungsbeispiels für eine bekannte Radialgleitlagervorrichtung. Diese weist ein Lagergehäuse 1, eine Welle 2, eine zwischen der Welle 2 und dem Lagergehäuse 1 angeordnete Gleitlagerbüchse 3, je einen zwischen der Gleitlagerbüchse 3 und der Welle 2 vorgesehenen verdichterseitigen und turbinenseitigen inneren Schmierspalt 10 und je einen zwischen der Gleitlagerbüchse 3 und dem Lagergehäuse 1 vorgesehenen verdichterseitigen und turbinenseitigen äußeren Schmierspalt 9 auf. Durch die Gleitlagerbüchse 3 verlaufen mehrere Ölzuführbohrungen 6, die sich jeweils in Radialrichtung 8 erstrecken. Beispielsweise handelt es sich um 3 Ölzuführbohrungen pro Lagerseite, also um insgesamt 6 Ölzuführbohrungen. Diese Ölzuführbohrungen 6 verbinden jeweils den äußeren Schmierspalt 9 mit dem inneren Schmierspalt 10 und leiten Schmieröl, das der dargestellten Vorrichtung durch im Lagergehäuse 1 vorgesehene Ölzuführkanäle 12 zugeführt wird, von den genannten Ölzuführkanälen durch die Gleitlagerbüchse 3 in den Bereich des jeweils zugehörigen inneren Schmierspaltes 10 weiter, wobei die Schmierölversorgung des inneren Schmierspaltes 10 jeweils in Radialrichtung 8 erfolgt.

In Axialrichtung 7 zwischen den beiden inneren Schmierspalten 10 ist ein Hohlraum 5 gebildet, in Axialrichtung 7 zwischen den beiden äußeren Schmierspalten 9 ein Hohlraum 4.

Aus der Figur 1 ist ersichtlich, dass bei dieser bekannten Vorrichtung die im Betrieb im äußeren Schmierspalt 9 gebildeten Quetschöldämpferflächen unsymmetrisch zur jeweiligen Ölzuführung positioniert sind. Des Weiteren sind die Quetschöldämpferflächen zur jeweils zugehörigen Innenlagerfläche in Axialrichtung 7 verschoben. Folglich sind die Innenlagerflächen in Radialrichtung 8 jeweils nur teilweise von der jeweils zugehörigen Quetschöldämpferfläche überdeckt. Des Weiteren liegen auch die Quetschöldämpferflächen in Radialrichtung 8 jeweils nur teilweise einer jeweils zugehörigen Innenlagerfläche gegenüber. Dies hat zur Folge, dass die Wirksamkeit der Quetschöldämpferflächen im Betrieb des Turboladers eingeschränkt ist.

Die Figur 2 zeigt eine Skizze zur Erläuterung eines zweiten Ausführungsbeispiels für eine bekannte Radialgleitlagervorrichtung. Diese weist ein Lagergehäuse 1, eine Welle 2, eine zwischen der Welle 2 und dem Lagergehäuse 1 angeordnete Gleitlagerbüchse 3, zwischen der Gleitlagerbüchse 3 und der Welle 2 vorgesehene innere Schmierspalte 10 und zwischen der Gleitlagerbüchse 3 und dem Gehäuse 1 vorgesehene äußere Schmierspalte 9 auf. In den äußeren Schmierspalten 9 sind Quetschöldämpferflächen gebildet. In den inneren Schmierspalten 10 sind Innenlagerflächen gebildet. Durch die Gleitlagerbüchse 3 verlaufen mittig in Radialrichtung 8 mehrere Ölzuführbohrungen 6. Diese Ölzuführbohrungen 6 leiten Schmieröl, das der dargestellten Vorrichtung durch einen im Lagergehäuse 1 vorgesehenen Ölzuführkanal 12 zugeführt wird, vom genannten Ölzuführkanal in Radialrichtung 8 in Öltaschen 4a und von dort aus in Umfangs- und Axialrichtung in die inneren Schmierspalte 10 weiter.

Aus der Figur 2 ist ersichtlich, dass sich bei diesem Ausführungsbeispiel die Quetschöldämpferflächen in Axialrichtung 7 der Welle 2 symmetrisch zur Ölzufuhr und zum inneren Schmierspalt 10 erstrecken. Weiterhin ist aus der Figur 2 ersichtlich, dass der innere Schmierspalt 10 in Radialrichtung 8 jeweils vollständig von der zugehörigen Quetschöldämpferfläche überdeckt ist. Ferner ist bei dem in der Figur 2 gezeigten Ausführungsbeispiel die Gleitlagerbüchse 3 in Axialrichtung 7 der Welle beidseitig von einer Abschirmung 11 umgeben, die in Form von Dichtringen realisiert ist.

Diese bekannte Radialgleitlagervorrichtung weist zwei separate, in Axialrichtung 7 voneinander beabstandete Gleitlagerbüchsen auf, von denen in der Figur 2 nur eine dargestellt ist.

Die Figur 3 zeigt eine Skizze zur Veranschaulichung des grundsätzlichen Aufbaus einer Gleitlagervorrichtung gemäß der Erfindung. Diese weist ein Lagergehäuse 1, eine Welle 2, eine zwischen der Welle 2 und dem Lagergehäuse 1 angeordnete Gleitlagerbüchse 3, einen zwischen der Gleitlagerbüchse 3 und der Welle 2 vorgesehenen inneren Schmierspalt 10 und einen zwischen der Gleitlagerbüchse 3 und dem Lagergehäuse 1 vorgesehenen äußeren Schmierspalt 9 auf. Bei dem äußeren Schmierspalt handelt es sich um einen Ringspalt, der zwischen der Gleitlagerbüchse und dem Lagergehäuse vorgesehen ist. Bei dem inneren Schmierspalt handelt es sich um einen Ringspalt, der zwischen der Gleitlagerbüchse und der Welle vorgesehen ist. Im äußeren Schmierspalt 9 ist eine Quetschöldämpferfläche gebildet. Im inneren Schmierspalt 10 ist eine Innenlagerfläche gebildet. Diese Innenlagerfläche ist durch die Mantelflächen der den inneren Schmierspalt bildenden Bauteile definiert. Durch die Gleitlagerbüchse 3 verlaufen Ölzuführbohrungen 6, die schräg durch die Gleitlagerbüchse 3 verlaufen. Diese Ölzuführbohrungen 6, von denen in der Figur 3 nur eine ersichtlich ist, leiten Schmieröl, das der dargestellten Vorrichtung durch einen im Lagergehäuse 1 vorgesehenen Ölzuführkanal 12 zugeführt wird, von dem genannten Ölzuführkanal in den Bereich der zugehörigen Innenlagerfläche weiter, wobei die Schmierölversorgung der Innenlagerfläche in schräger Richtung erfolgt und wobei im Schmieröleintrittsbereich der Innenlagerfläche Öltaschen 4a vorgesehen sind.

Aus der Figur 3 ist ersichtlich, dass bei der dargestellten Vorrichtung die im äußeren Schmierspalt 9 gebildete Quetschöldämpferfläche außermittig, vorzugsweise einseitig mit Schmieröl versorgt wird. Die im äußeren Schmierspalt 9 gebildete Quetschöldämpferfläche überdeckt die im inneren Schmierspalt 10 gebildete Innenlagerfläche nahezu vollständig. Sie kann auch in Axialrichtung 7 der Welle 2 geringfügig über die Innenlagerfläche hinausragen oder mit dieser in Radialrichtung 8 in einer Flucht abschließen Im letztgenannten Fall liegen der axiale Außenrand der Quetschöldämpferfläche und der axiale Außenrand der Innenlagerfläche in Radialrichtung der Welle 2 in einer Flucht.

Gemäß einer alternativen Ausführungsform zu dem in der Figur 3 gezeigten Ausführungsbeispiel ist im äußeren Schmierspalt 9 eine Quetschöldämpferfläche gebildet, die die die Innenlagerfläche des inneren Schmierspaltes 10 weitgehend überdeckt. Unter einer weitgehenden Überdeckung wird dabei eine Überdeckung von mehr als 70 % verstanden.

Des Weiteren ist aus der Figur 3 ersichtlich, dass der lagergehäuseseitige Eingang der Ölzuführbohrung 6 in der Gleitlagerbüchse 3 außermittig angeordnet ist.

Der Winkel, in welchem die Ölzuführbohrung 6 durch die Gleitlagerbüchse 3 verläuft, liegt vorzugsweise in einem Bereich von 20° bis 70° relativ zur Axialrichtung 7 der Welle.

Die anhand der Figur 3 erläuterte Radialgleitlagervorrichtung weist zwei separate, in Axialrichtung voneinander beabstandete Gleitlagerbüchsen auf, von denen in der Figur 3 nur eine dargestellt ist. Die in der Figur 3 nicht dargestellte Gleitlagerbüchse hat denselben grundsätzlichen Aufbau wie die dargestellte Gleitlagerbüchse. Insbesondere weist sie ebenfalls Ölzuführbohrungen auf, die schräg durch die Gleitlagerbüchse verlaufen, wobei der lagergehäuseseitige Eingang der Ölzuführbohrungen in der Gleitlagerbüchse außermittig angeordnet ist, die Ölzuführbohrungen in einem Winkel durch die Gleitlagerbüchse verlaufen, der im Bereich zwischen 20° und 70° liegt, und wobei die Quetschöldämpferfläche außermittig, vorzugsweise von einer Seite aus, mit Schmieröl versorgt wird.

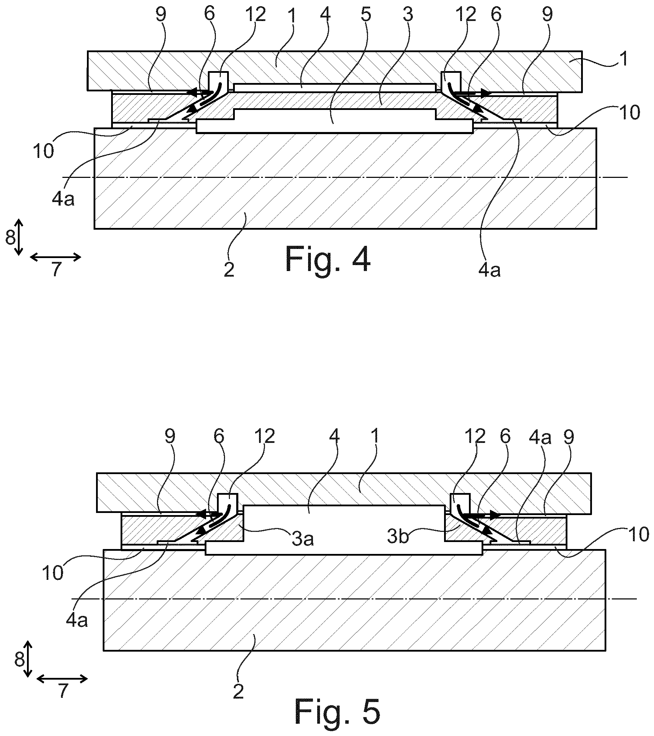

Die Figur 4 zeigt eine Skizze zur Erläuterung eines ersten Ausführungsbeispiels für eine Radialgleitlagervorrichtung gemäß der Erfindung. Diese Radialgleitlagervorrichtung weist ein Lagergehäuse 1, eine Welle 2, eine zwischen der Welle 2 und dem Lagergehäuse 1 angeordnete Gleitlagerbüchse 3, zwischen der Gleitlagerbüchse 3 und der Welle 2 vorgesehene innere Schmierspalte 10 und zwischen der Gleitlagerbüchse 3 und dem Lagergehäuse 1 vorgesehene äußere Schmierspalte 9 auf. In den äußeren Schmierspalten 9 sind Quetschöldämpferflächen gebildet. In den inneren Schmierspalten 10 sind Innenlagerflächen gebildet. Durch die Gleitlagerbüchse 3 verlaufen separate, in Axialrichtung 7 der Welle 2 voneinander beabstandete Ölzuführbohrungen 6, die jeweils schräg durch die Gleitlagerbüchse 3 verlaufen. Diese Ölzuführbohrungen 6 leiten jeweils Schmieröl, das der dargestellten Vorrichtung durch im Lagergehäuse 1 vorgesehene Ölzuführkanäle 12 zugeführt wird, von den genannten Ölzuführkanälen durch die Gleitlagerbüchse 3 in den Bereich der jeweils zugehörigen Innenlagerfläche weiter, wobei die Schmierölversorgung der Innenlagerfläche jeweils in Schrägrichtung erfolgt und wobei im Schmieröleintrittsbereich der Innenlagerfläche Öltaschen 4a vorgesehen sind.

Aus der Figur 4 ist ersichtlich, dass bei der dargestellten Vorrichtung die Quetschöldämpferflächen jeweils außermittig, vorzugsweise einseitig, mit Schmieröl versorgt werden. Des Weiteren sind die Quetschöldämpferflächen jeweils in Radialrichtung 8 derart direkt über einer jeweils zugehörigen Innenlagerfläche positioniert, dass die Innenlagerflächen in Radialrichtung 8 vollständig von der jeweils zugehörigen Quetschöldämpferfläche überdeckt sind.

Bei dem in der Figur 4 gezeigten Ausführungsbeispiel verlaufen die axialen Außenränder der Quetschöldämpferflächen in Radialrichtung 8 mit den axialen Außenrändern der Innenlagerflächen in einer Flucht. Die axialen Innenränder der Quetschöldämpferflächen überstehen die axialen Innenränder der Innenlagerflächen 10 in Axialrichtung 7.

Eine alternative Ausführung besteht darin, dass die axialen Außenränder der Quetschöldämpferflächen und die axialen Innenränder der Quetschöldämpferflächen jeweils in Radialrichtung 8 mit den axialen Außenrändern der Innenlagerflächen bzw. den axialen Innenrändern der Innenlagerflächen in einer Flucht verlaufen.

Eine weitere alternative Ausführung besteht darin, dass die axialen Außenränder der Innenlagerflächen in Radialrichtung 8 die axialen Außenränder der Quetschöldämpferflächen geringfügig nach außen überstehen.

Bei der Wahl der vorstehend genannten Überstände muss darauf geachtet werden, dass stets eine ausreichend große Quetschöldämpferfläche vorliegt, so dass deren Wirksamkeit im Betrieb des Turboladers nicht eingeschränkt ist.

Bei der in der Figur 4 gezeigten Vorrichtung weist die Radialgleitlagervorrichtung eine einzige Gleitlagerbüchse 3 auf, durch welche in Axialrichtung 7 der Welle 2 voneinander beabstandete Ölzuführbohrungen 6 jeweils schräg verlaufen. Vorzugsweise liegt der Winkel, in welchem die Ölzuführbohrungen durch die Gleitlagerbüchse 3 verlaufen, im Bereich zwischen 20° und 70° relativ zur Axialrichtung 7 bzw. relativ zur Längsmittelachse der Welle 2. Der axiale Abstand der beiden in ein und derselben Gleitlagerbüchse 3 vorgesehenen Ölzuführbohrungen 6 vergrößert sich in Richtung vom Lagergehäuse 1 zur Welle 2.

Des Weiteren ist aus der Figur 4 ersichtlich, dass bei dem dort gezeigten Ausführungsbeispiel die Ölzufuhr aus dem Ölzufuhrkanal 12 des Lagergehäuses 1 zur jeweiligen Quetschöldämpferfläche außermittig erfolgt, vorzugsweise von einer Seite aus erfolgt.

Die Figur 5 zeigt eine Skizze zur Erläuterung eines zweiten Ausführungsbeispiels für eine Radialgleitlagervorrichtung gemäß der Erfindung. Diese Radialgleitlagervorrichtung unterscheidet sich von der in der Figur 4 gezeigten Radialgleitlagervorrichtung im Wesentlichen lediglich dadurch, dass sie zwei voneinander getrennte und in Axialrichtung 7 der Welle 2 voneinander beabstandete Gleitlagerbüchsen 3a und 3b aufweist.

Die in der Figur 5 dargestellte Radialgleitlagervorrichtung weist ein Lagergehäuse 1, eine Welle 2, zwischen der Welle 2 und dem Lagergehäuse 1 angeordnete Gleitlagerbüchsen 3a und 3b, zwischen diesen Gleitlagerbüchsen und der Welle 2 vorgesehene innere Schmierspalte 10 und zwischen den Gleitlagerbüchsen und dem Lagergehäuse 1 vorgesehene äußere Schmierspalte 9 auf. In den äußeren Schmierspalten 9 sind Quetschöldämpferflächen gebildet, wobei eine dieser Quetschöldämpferflächen im Bereich der Gleitlagerbüchse 3a und die andere Quetschöldämpferfläche im Bereich der Gleitlagerbüchse 3b gebildet ist. In den inneren Schmierspalten 10 sind Innenlagerflächen gebildet, wobei eine dieser Innenlagerflächen im Bereich der Gleitlagerbüchse 3a und die andere Innenlagerfläche im Bereich der Gleitlagerbüchse 3b gebildet ist. Durch die Gleitlagerbüchsen 3a und 3b verlaufen jeweils in Axialrichtung 7 der Welle 2 schräg verlaufende Ölzuführbohrungen 6. Diese Ölzuführbohrungen 6 leiten jeweils Schmieröl, das der dargestellten Vorrichtung durch im Lagergehäuse 1 vorgesehene Ölzuführkanäle 12 zugeführt wird, von den genannten Ölzuführkanälen durch die jeweilige Gleitlagerbüchse in den Bereich der jeweils zugehörigen Innenlagerfläche weiter, wobei die Schmierölversorgung der Innenlagerfläche jeweils in Schrägrichtung erfolgt.

Aus der Figur 5 ist ersichtlich, dass bei der dargestellten Vorrichtung die Quetschöldämpferflächen jeweils außermittig, vorzugsweise von einer Seite aus, mit Schmieröl versorgt werden. Des Weiteren sind die Quetschöldämpferflächen in Radialrichtung 8 jeweils derart direkt über einer jeweils zugehörigen Innenlagerfläche positioniert, dass die Innenlagerflächen in Radialrichtung 8 vollständig von der jeweils zugehörigen Quetschöldämpferfläche überdeckt sind.

Bei dem in der Figur 5 gezeigten Ausführungsbeispiel verlaufen die axialen Außenränder der Quetschöldämpferflächen in Radialrichtung 8 mit den axialen Außenrändern der Innenlagerflächen in einer Flucht. Die axialen Innenränder der Quetschöldämpferflächen überstehen die axialen Innenränder der Innenlagerflächen in Axialrichtung 7 geringfügig.

Eine alternative Ausführung besteht darin, dass die axialen Außenränder der Quetschöldämpferflächen und die axialen Innenränder der Quetschöldämpferflächen jeweils in Radialrichtung 8 mit den axialen Außenrändern der Innenlagerflächen bzw. den axialen Innenrändern der Innenlagerflächen in einer Flucht verlaufen.

Eine weitere alternative Ausführung besteht darin, dass die axialen Außenränder der Innenlagerflächen in Radialrichtung 8 die axialen Außenränder der Quetschöldämpferflächen geringfügig nach außen überstehen.

Bei der Wahl der vorstehend genannten Überstände muss darauf geachtet werden, dass stets eine ausreichend große Quetschöldämpferfläche vorliegt, so dass deren Wirksamkeit im Betrieb des Turboladers nicht eingeschränkt ist und vorzugsweise des Weiteren gewährleistet ist, dass die Quetschöldämpferflächen ihren Schwerpunkt in derselben axialen Position haben wie die jeweils zugehörige Lagerinnenfläche. Nur dann kann sichergestellt werden, dass im Betrieb des Turboladers die Stabilität des Radiallagers und die Rotation der Welle im Vergleich zu bekannten Vorrichtungen erhöht ist.

Vorzugsweise liegt der Winkel, in welchem die Ölzuführbohrungen durch die Gleitlagerbüchsen 3a und 3b verlaufen, im Bereich zwischen 20° und 70° relativ zur Axialrichtung 7 bzw. relativ zur Längsmittelachse der Welle 2.

Der axiale Abstand der in den beiden Gleitlagerbüchsen 3a und 3b vorgesehenen Ölzuführbohrungen 6 vergrößert sich in Richtung vom Lagergehäuse 1 zur Welle 2.

Des Weiteren ist aus der Figur 5 ersichtlich, dass bei dem dort gezeigten Ausführungsbeispiel die Ölzufuhr aus dem Ölzufuhrkanal 12 des Lagergehäuses 1 zur jeweiligen Quetschöldämpferfläche außermittig, vorzugsweise von einer Seite aus, erfolgt.

Die vorstehend anhand von Ausführungsbeispielen beschriebene Erfindung besteht nach alledem insbesondere darin, bei einer Radialgleitlagervorrichtung, die ein Lagergehäuse, eine Welle und ein oder mehrere zwischen dem Lagergehäuse und der Welle angeordnete Gleitlagerbüchsen aufweist, in der bzw. den Gleitlagerbüchsen Ölzuführbohrungen vorzusehen, die jeweils schräg durch die Gleitlagerbüchse verlaufen, wobei diese Ölzuführbohrungen außermittig, vorzugsweise von einer Seite aus, mit Schmieröl versorgt werden, welches der Gleitlagerbüchse durch einen im Lagergehäuse vorgesehenen Ölzufuhrkanal bereitgestellt wird. Die Quetschöldämpferflächen überdecken einen jeweils zugehörigen Innenlagerbereich in Radialrichtung zumindest nahezu vollständig, so dass die Wirksamkeit der Quetschöldämpferfläche im Betrieb des Turboladers nicht beeinträchtigt ist.

Bei den oben beschriebenen Ausführungsbeispielen sind die Gleitlagerbüchsen jeweils zwischen dem Lagergehäuse und der Welle des jeweiligen Abgasturboladers angeordnet. Darunter ist auch zu verstehen, dass die Gleitlagerbüchsen zwischen einem im Lagergehäuse vorgesehenen Lagereinsatz und der Welle des Abgasturboladers angeordnet sind.

### Bezugszeichenliste:

- 1: Lagergehäuse, Lagereinsatz des Lagergehäuses
- 2: Welle
- 3: Gleitlagerbüchse
- 3a: Gleitlagerbüchse
- 3b: Gleitlagerbüchse
- 4: Hohlraum
- 4a: Öltasche
- 5: Hohlraum
- 6: Ölzuführbohrung in der Gleitlagerbüchse
- 7: Axialrichtung der Welle
- 8: Radialrichtung der Welle
- 9: äußerer Schmierspalt
- 10: innerer Schmierspalt
- 11: Abschirmung, Dichtring
- 12: Ölzuführkanal im Lagergehäuse

## Patentansprüche

1. Radialgleitlagervorrichtung, mit
einem Lagergehäuse (1),
einer Welle (2),
einer oder mehreren zwischen der Welle und dem Lagergehäuse angeordneten Gleitlagerbüchsen (3, 3a, 3b),
einem zwischen der jeweiligen Gleitlagerbüchse und dem Lagergehäuse vorgesehenen äußeren Schmierspalt (9),
einem zwischen der jeweiligen Gleitlagerbüchse und der Welle vorgesehenen inneren Schmierspalt (10) und
mehreren in der jeweiligen Gleitlagerbüchse befindlichen, den äußeren Schmierspalt mit dem inneren Schmierspalt über Öltaschen (4a) verbindende Ölzuführbohrungen (6), wobei
die Ölzuführbohrungen (6) in Axialrichtung (7) der Welle (2) schräg durch die jeweilige Gleitlagerbüchse (3, 3a, 3b) verlaufen.

2. Radialgleitlagervorrichtung nach Anspruch 1, welche des Weiteren eine im äußeren Schmierspalt (9) gebildete Quetschöldämpferfläche aufweist.

3. Radialgleitlagervorrichtung nach Anspruch 1 oder 2, bei welcher im äußeren Schmierspalt (9) eine Quetschöldämpferfläche gebildet ist, die eine im inneren Schmierspalt (10) vorgesehene Innenlagerfläche in Radialrichtung (8) der Welle vollständig überdeckt.

4. Radialgleitlagervorrichtung nach Anspruch 1 oder 2, bei welchem der axiale Außenrand der Quetschöldämpferfläche und der axiale Außenrand der Innenlagerfläche in Radialrichtung (8) der Welle in einer Flucht liegen.

5. Radialgleitlagervorrichtung nach Anspruch 4, bei welchem der axiale Innenrand der Quetschöldämpferfläche den axialen Innenrand der Innenlagerfläche in Axialrichtung (7) der Welle übersteht.

6. Radialgleitlagervorrichtung nach Anspruch 1 oder 2, bei welchem im äußeren Schmierspalt (9) eine Quetschöldämpferfläche gebildet ist, die die zugehörige Innenlagerfläche in Radialrichtung (8) der Welle weitgehend überdeckt.

7. Radialgleitlagervorrichtung nach Anspruch 6, bei welchem die Quetschöldämpferfläche die zugehörige Innenlagerfläche zu mehr als 70 % überdeckt.

8. Radialgleitlagervorrichtung nach einem der Ansprüche 2 bis 6, bei welchem die Quetschöldämpferfläche außermittig mit Schmieröl versorgt wird.

9. Radialgleitlagervorrichtung nach Anspruch 8, bei welcher die Quetschöldämpferfläche von einer Seite aus mit Schmieröl versorgt wird.

10. Radialgleitlagervorrichtung nach einem der vorgehenden Ansprüche, bei welchem die Ölzuführbohrungen (6, 6a, 6b) in einem Winkel durch die Gleitlagerbüchse (3, 3a, 3b) verlaufen, der im Bereich von 20° bis 70° liegt.

11. Radialgleitlagervorrichtung nach einem der vorhergehenden Ansprüche, welche zwei separate, in Axialrichtung (7) der Welle voneinander beabstandete Gleitlagerbüchsen (3a, 3b) aufweist.

12. Radialgleitlagervorrichtung nach Anspruch 11, bei welchem die Ölzuführbohrungen (6) derart schräg durch die jeweilige Gleitlagerbüchse (3a, 3b) verlaufen, dass ihr Abstand voneinander in Richtung vom Lagergehäuse zur Welle größer wird.

13. Radialgleitlagervorrichtung nach einem der Ansprüche 1 bis 10, welche eine einzige Gleitlagerbüchse (3) aufweist, durch welche in Axialrichtung (7) der Welle voneinander beabstandete Ölzufuhrbohrungen (6) verlaufen.

14. Radialgleitlagervorrichtung nach Anspruch 13, bei welcher die Ölzuführbohrungen (6) jeweils derart schräg durch die Gleitlagerbüchse (3) verlaufen, dass ihr Abstand voneinander in Richtung vom Lagergehäuse zur Welle größer wird.

15. Radialgleitlagervorrichtung nach einem der vorhergehenden Ansprüche, bei welchem die Gleitlagerbüchsen ihren axialen Endbereichen benachbart jeweils eine Abschirmung (11) aufweisen, bei der es sich um einen Dichtring oder einen Bund im Lagergehäuse handelt.
